# EUROPEAN PATENT APPLICATION

(11) **EP 3 796 549 A1**
(43) Date of publication of application: **24.03.2021**
(21) Application number: 19803169.2
(22) Date of filing: 09.05.2019
(51) Int. Cl.: H02S 30/10, H02S 20/10

(54) **METHOD FOR PRODUCING SOLAR PHOTOVOLTAIC POWER GENERATION DEVICE, JIG FOR PRODUCING SOLAR PHOTOVOLTAIC POWER GENERATION DEVICE, AND APPARATUS FOR PRODUCING SOLAR PHOTOVOLTAIC POWER GENERATION DEVICE**

(30) Priority: 15.05.2018 JP 2018093581
(71) Applicant: SUMITOMO ELECTRIC INDUSTRIES, LTD., Osaka-shi, Osaka 541-0041 (JP)
(72) Inventor: KONAKA, Hiroyuki, Osaka-shi, Osaka 541-0041 (JP); MORI, Koji, Osaka-shi, Osaka 541-0041 (JP); SAITO, Kenji, Osaka-shi, Osaka 541-0041 (JP); IMAI, Ryusuke, Osaka-shi, Osaka 541-0041 (JP)
(74) Representative: Boult Wade Tennant LLP
(86) International application number: PCT/JP2019/018487
(87) International publication number: WO 2019/220992

(57) **Abstract**

A method for manufacturing a solar photovoltaic power generation apparatus comprises: forming a solar cell array by attaching a plurality of solar cell modules to a fixing member; and attaching the solar cell array to a support arm.

## Description

### TECHNICAL FIELD

The present disclosure relates to a method for manufacturing a solar photovoltaic power generation apparatus, a jig for manufacturing a solar photovoltaic power generation apparatus, and an apparatus for manufacturing a solar photovoltaic power generation apparatus. The present application claims priority based on Japanese Patent Application No. 2018-093581 filed on May 15, 2018. The entire contents of the description in the Japanese patent application are incorporated herein by reference.

### BACKGROUND ART

Japanese Patent Laid-Open No. 2017-022838 discloses a concentrator photovoltaic apparatus. The concentrator photovoltaic apparatus employs a compound semiconductor element as a power generating element and causes a Fresnel lens to concentrate sunlight which is in turn caused to be incident on the power generating element to generate electric power.

### CITATION LIST

### PATENT LITERATURE

PTL 1: Japanese Patent Laid-Open No. 2017-022838

### SUMMARY OF INVENTION

A method for manufacturing a solar photovoltaic power generation apparatus according to one aspect of the present disclosure comprises the following steps. A solar cell array is formed by attaching a plurality of solar cell modules to a fixing member extending in a longitudinal direction. The solar cell array is attached to a support arm.

A jig for manufacturing a solar photovoltaic power generation apparatus according to one aspect of the present disclosure is a solar photovoltaic power generation apparatus manufacturing jig for holding a solar cell array having a pair of fixing members extending in a longitudinal direction, the jig comprising a pair of attachment portions and a central region. The pair of attachment portions allows the pair of fixing members to be attached thereto. The central region is provided between the paired attachment portions. The central region has an insertion hole.

### BRIEF DESCRIPTION OF DRAWINGS

Fig. 1 is a schematic perspective view of a configuration of a solar photovoltaic power generation apparatus according to an embodiment of the present invention.
Fig. 2 is a schematic flowchart of a method for manufacturing the solar photovoltaic power generation apparatus according to the present embodiment.
Fig. 3 is a schematic front view showing a first step of the method for manufacturing the solar photovoltaic power generation apparatus according to the present embodiment.
Fig. 4 is a schematic plan view showing the first step of the method for manufacturing the solar photovoltaic power generation apparatus according to the present embodiment.
Fig. 5 is a schematic front view showing a second step of the method for manufacturing the solar photovoltaic power generation apparatus according to the present embodiment.
Fig. 6 is a schematic plan view showing the second step of the method for manufacturing the solar photovoltaic power generation apparatus according to the present embodiment.
Fig. 7 is a schematic cross section of a configuration of a rail of the solar photovoltaic power generation apparatus according to the present embodiment.
Fig. 8 is a schematic side view showing the second step of the method for manufacturing the solar photovoltaic power generation apparatus according to the present embodiment.
Fig. 9 is a schematic perspective view showing a configuration of a jig for manufacturing the solar photovoltaic power generation apparatus according to the present embodiment.
Fig. 10 is a schematic cross section taken along a line X-X of Fig. 9.
Fig. 11 is a schematic perspective view showing a state in which a jig for manufacturing the solar photovoltaic power generation apparatus is attached to the rail.
Fig. 12 is a schematic side view showing a third step of the method for manufacturing the solar photovoltaic power generation apparatus according to the present embodiment.
Fig. 13 is a schematic front view showing the third step of the method for manufacturing the solar photovoltaic power generation apparatus according to the present embodiment.
Fig. 14 is a schematic front view showing a configuration of a lift of an apparatus for manufacturing the solar photovoltaic power generation apparatus according to the present embodiment.
Fig. 15 is a schematic front view showing a fourth step of the method for manufacturing the solar photovoltaic power generation apparatus according to the present embodiment.
Fig. 16 is a schematic front view showing a fifth step of the method for manufacturing the solar photovoltaic power generation apparatus according to the present embodiment.
Fig. 17 is a schematic front view showing a sixth step of the method for manufacturing the solar photovoltaic power generation apparatus according to the present embodiment.
Fig. 18 is a schematic front view showing a seventh step of the method for manufacturing the solar photovoltaic power generation apparatus according to the present embodiment.
Fig. 19 is a schematic cross section of a configuration of a modified example of the rail of the solar photovoltaic power generation apparatus according to the present embodiment.

### DETAILED DESCRIPTION

### [Problem to be Solved by the Present Disclosure]

A concentrator photovoltaic apparatus is assembled generally in the following procedure: Initially, a rail for fixing a solar cell module is attached to a support arm of a tracking mount. In doing so, it is necessary to adjust a solar cell module attachment surface in level (or horizontality). For example, the solar cell module attachment surface is adjusted in level by inserting a level adjusting spacer between the support arm and the solar cell module fixing rail.

The solar cell module has a bottom portion attached to the solar cell module fixing rail. This requires a worker to be under the solar cell module and face upward in working to fix the solar cell module fixing rail to the solar cell module. In addition, the work to fix the solar cell module is conducted at a level around one meter above the ground. This results in poor workability in working to fix the solar cell module fixing rail to the solar cell module.

One aspect of the present disclosure has been made in order to solve the above-described problems, and an object of the present disclosure is to provide a method for manufacturing a solar photovoltaic power generation apparatus, a jig for manufacturing the solar photovoltaic power generation apparatus, and an apparatus for manufacturing the solar photovoltaic power generation apparatus, that can enhance productivity

### [Advantageous Effect of the Present Disclosure]

According to one aspect of the present disclosure, there can be provided a method for manufacturing a solar photovoltaic power generation apparatus, a jig for manufacturing the solar photovoltaic power generation apparatus, and an apparatus for manufacturing the solar photovoltaic power generation apparatus, that can enhance productivity.

### [Overview of Embodiments of the Present Disclosure]

Initially, an embodiment of the present disclosure will be outlined.
(1) A method for manufacturing a solar photovoltaic power generation apparatus 100 according to one aspect of the present disclosure includes the following steps. A solar cell array 1 is formed by attaching a plurality of solar cell modules 10 to a fixing member 20 extending in a longitudinal direction. Solar cell array 1 is attached to a support arm 2. By previously preparing solar cell array 1 in a factory or the like in which an environment for installation is stable, a negative effect on efficiency of installation due to environment, weather, and the like can be minimized. As a result, the productivity of solar photovoltaic power generation apparatus 100 is improved.
(2) In the method for manufacturing solar photovoltaic power generation apparatus 100 according to item (1) above, the step of forming solar cell array 1 may include: disposing the plurality of solar cell modules 10 each with a bottom surface 11 facing upward; and disposing fixing member 20 on bottom surface 11. This allows fixing member 20 to be fixed to each of the plurality of solar cell modules 10 in an operation performed from above the plurality of solar cell modules 10. When this is compared with a fixing operation performed from below, the former allows the fixing operation to be done efficiently. Furthermore, when the fixing operation is performed from above, a fixed state can be easily inspected. This can improve solar photovoltaic power generation apparatus 100 in quality.
(3) According to the method for manufacturing solar photovoltaic power generation apparatus 100 according to item (2) above, in the step of disposing the plurality of solar cell modules 10 each with bottom surface 11 facing upward, the plurality of solar cell modules 10 may each be disposed on a workbench 30. This allows the fixing operation to be done more efficiently. In addition, disposing the plurality of solar cell modules 10 on workbench 30 each with bottom surface 11 facing upward allows fixing member 20 to be attached to bottom surface 11 from above and hence efficiently.
(4) According to the method for manufacturing solar photovoltaic power generation apparatus 100 according to item (3) above, workbench 30 may have a flat working surface 31. The plurality of solar cell modules 10 may each have a top surface 12 facing away from bottom surface 11. Top surface 12 may be in contact with working surface 31. The plurality of solar cell modules 10 can thus be each easily improved in horizontality. This can reduce the necessity of inserting a level adjusting spacer between each of the plurality of solar cell modules 10 and fixing member 20. As a result, the productivity of solar photovoltaic power generation apparatus 100 can be improved.
(5) The method for manufacturing solar photovoltaic power generation apparatus 100 according to any one of items (1) to (4) above may further comprise: attaching a jig 50 to fixing member 20; inverting solar cell array 1 together with jig 50; and inserting a shaft 73 of a lifter 70 through an insertion hole 54 of jig 50. In the step of inverting solar cell array 1 together with jig 50, solar cell modules 10 may be inverted with shaft 73 serving as an axis of rotation. This allows heavy solar cell array 1 to be easily inverted.
(6) The method for manufacturing solar photovoltaic power generation apparatus 100 according to item (5) above may further comprise transporting solar cell array 1 while solar cell array 1 is supported by lifter 70. This allows heavy solar cell array 1 to be easily transported.
(7) The method for manufacturing solar photovoltaic power generation apparatus 100 according to item (5) or (6) above may further comprise adjusting solar cell array 1 in level while solar cell array 1 is supported by lifter 70. This allows heavy solar cell array 1 to be transported in a stable state.
(8) In the method for manufacturing solar photovoltaic power generation apparatus 100 according to item (7) above, the step of adjusting solar cell array 1 in level may precede the step of transporting solar cell array 1. This allows solar cell array 1 to be adjusted in level suitably for transporting solar cell array 1.
(9) According to the method for manufacturing solar photovoltaic power generation apparatus 100 according to item (8) above, solar cell array 1 may be lower in level in the step of transporting solar cell array 1 than in the step of inverting solar cell array 1. Keeping solar cell array 1 low in level allows solar cell array 1 to be transported in a stable state.
(10) In the method for manufacturing solar photovoltaic power generation apparatus 100 according to any one of items (1) to (9) above, fixing member 20 may have a cross section in the form of a letter Z. Fixing member 20 can thus be enhanced in strength. As a result, flexing of fixing member 20 can be suppressed. The plurality of solar cell modules 10 can thus be each easily improved in horizontality.
(11) Jig 50 for manufacturing solar photovoltaic power generation apparatus 100 according to one aspect of the present disclosure is a solar photovoltaic power generation apparatus manufacturing jig for holding solar cell array 1 having a pair of fixing members 20 extending in a longitudinal direction, jig 50 comprising: a pair of attachment portions 52 and a central region 51. The pair of attachment portions 52 allows the pair of fixing members 20 to be attached thereto. Central region 51 is provided between the paired attachment portions 52. Central region 51 has insertion hole 54. This allows solar cell array 1 to be easily inverted. As a result, the productivity of solar photovoltaic power generation apparatus 100 can be improved.
(12) In jig 50 for manufacturing solar photovoltaic power generation apparatus 100 according to item (11) above, central region 51 may be larger in thickness than each of the paired attachment portions 52. Jig 50 for manufacturing solar photovoltaic power generation apparatus 100 can thus be enhanced in rigidity.
(13) In jig 50 for manufacturing solar photovoltaic power generation apparatus 100 according to item (11) or (12) above, the paired attachment portions 52 may each include a first surface 52a brought into contact with a respective one of the paired fixing members 20 and a second surface 52b facing away from first surface 52a. Second surface 52b may have a protrusion 53 contiguous to central region 51. Jig 50 for manufacturing solar photovoltaic power generation apparatus 100 can thus be further enhanced in rigidity.
(14) An apparatus for manufacturing solar photovoltaic power generation apparatus 100 according to an aspect of the present disclosure comprises jig 50 for manufacturing solar photovoltaic power generation apparatus 100 according to any one of items (11) to (13) above, and lifter 70 having shaft 73 that can be inserted through insertion hole 54. Lifter 70 has a tire 75. When lifter 70 is a typical lifter, a caster made of metal is used therefor. When lifter 70 with a caster made of metal moves on an unpaved ground surface such as desert, the caster catches sand and cannot move smoothly. When tire 75 is used instead of the caster, lifter 70 can be moved easily even on an unpaved ground surface such as desert.

### [Detailed Description of Embodiments of the Present Disclosure]

Hereinafter, an embodiment of the present disclosure will more specifically be described with reference to the drawings. In the figures, identical or equivalent components are identically denoted and will not be described repeatedly.

### (Solar photovoltaic power generation apparatus)

Initially, a configuration of a solar photovoltaic power generation apparatus 100 according to an embodiment will be described.

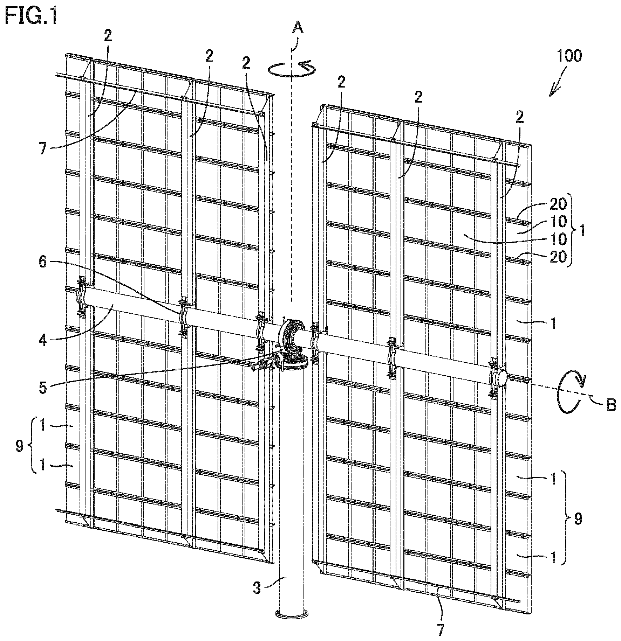

As shown in Fig. 1, solar photovoltaic power generation apparatus 100 according to the present embodiment is a concentrator photovoltaic power generation apparatus, and mainly includes a pole 3, a rotary shaft 4, a solar cell array 1, a support arm 2, a drive 5, and a fastener 6. Solar cell array 1 includes a plurality of solar cell modules 10 and a pair of rails 20 (a pair of fixing members 20 extending in a longitudinal direction). While the number of solar cell modules 10 included in a single solar cell array 1 is not particularly limited, eight solar cell modules 10 are included therein for example. Solar cell modules 10 are disposed in a direction parallel to rotary shaft 4. The pair of rails 20 extends in a direction parallel to a direction in which rotary shaft 4 extends. The pair of rails 20 is attached to a bottom surface 11 of each of the plurality of solar cell modules 10. A plurality of solar cell arrays 1 constitute a solar cell array assembly 9.

Support arm 2 is a support for supporting the plurality of solar cell arrays 1. Support arm 2 is attached to rotary shaft 4 by fastener 6. Support arm 2 extends in a direction intersecting the direction in which rotary shaft 4 extends. Although the number of support arms 2 is not particularly limited, it is for example six support arms. For example, three support arms 2 are provided for solar cell array assembly 9 disposed on one side of pole 3, and three support arms 2 are provided for solar cell array assembly 9 disposed on the other side of pole 3. The three support arms 2 may each have an end provided with a connector 7 extending in a direction parallel to the direction in which rotary shaft 4 extends.

Solar cell array assembly 9 is configured to be rotatable about two axes. Specifically, solar cell array assembly 9 is configured to be rotatable about a first axis of rotation A extending along a direction in which pole 3 extends. When solar cell array assembly 9 rotates about first axis of rotation A, solar cell array assembly 9 rotates in a direction of azimuth angle. Solar cell array assembly 9 is also configured to be rotatable about a second axis of rotation B extending along the direction in which rotary shaft 4 extends. When solar cell array assembly 9 rotates about second axis of rotation B, solar cell array assembly 9 rotates in a direction of elevation angle. Thus, solar cell array assembly 9 can track the movement of the sun and move accordingly. Specifically, solar cell array assembly 9 is movable according to the movement of the sun to maintain an angle to face the sun.

### (Method for manufacturing solar photovoltaic power generation apparatus)

Subsequently, a method for manufacturing solar photovoltaic power generation apparatus 100 according to the present embodiment will be described.

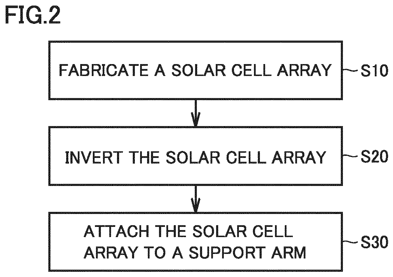

As shown in Fig. 2, the method for manufacturing solar photovoltaic power generation apparatus 100 according to the present embodiment mainly comprises: forming a solar cell array (S10), inverting the solar cell array (S20), and attaching the solar cell array to a support arm (S30).

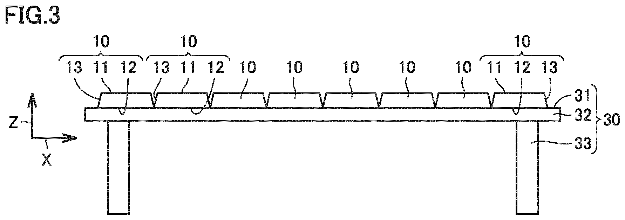

Initially, the step of forming solar cell array 1 (S10) is performed. Specifically, a plurality of solar cell modules 10 are each disposed on a workbench 30. Workbench 30 has a height of approximately 0.7 m or more and 1.0 m or less, for example. This allows a standing worker to work efficiently. As shown in Fig. 3, workbench 30 mainly includes a top plate 32 and a support 33. Support 33 supports top plate 32. Top plate 32 has a flat working surface 31. The plurality of solar cell modules 10 each have a top surface 12, a bottom surface 11, and a side surface 13. On top surface 12, for example, a concentrator solar cell module (not shown) is disposed. The concentrator solar cell module includes, for example, a Fresnel lens (not shown). Bottom surface 11 is a surface facing away from top surface 12. On bottom surface 11, for example, a power generating element (not shown) is disposed.

As shown in Fig. 3, the plurality of solar cell modules 10 are each disposed with bottom surface 11 facing upward Z. "Upward" means a direction within ±1° with respect to a vertically upward direction. In other words, the plurality of solar cell modules 10 are each disposed to have top surface 12 facing working surface 31. In other words, the plurality of solar cell modules 10 are disposed to each have top surface 12 facing downward. "Downward" means a direction within ±1° with respect to a vertically downward direction. The plurality of solar cell modules 10 may each have top surface 12 in contact with working surface 31. While the number of solar cell modules 10 is not particularly limited, it is for example eight solar cell modules.

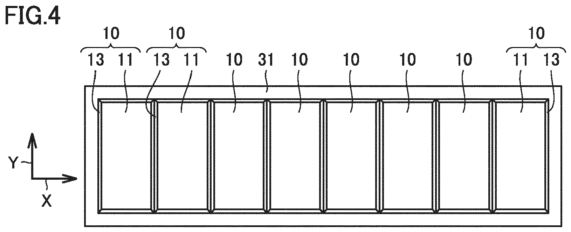

As shown in Fig. 4, the plurality of solar cell modules 10 are each generally in the form of a rectangle in plan view (as observed in the vertical direction). The plurality of solar cell modules 10 each have a shorter side extending in a first direction X and a longer side extending in a second direction Y. Second direction Y is perpendicular to first direction X. As shown in Fig. 4, the plurality of solar cell modules 10 are each disposed in first direction X. In other words, the plurality of solar cell modules 10 are each disposed in the direction of the shorter side of solar cell module 10. Any two adjacent solar cell modules 10 may be in contact with each other.

As shown in Fig. 4, working surface 31 extends in each of first direction X and second direction Y. In a plan view, working surface 31 is, for example, rectangular. First direction X is a longitudinal direction of working surface 31. The plurality of solar cell modules 10 are each disposed in the longitudinal direction of working surface 31. Top plate 32 is desirably a single monolithic plate. Specifically, top plate 32 is desirably made of solid wood. This allows working surface 31 to be flatter than when two workbenches 30 are disposed side by side.

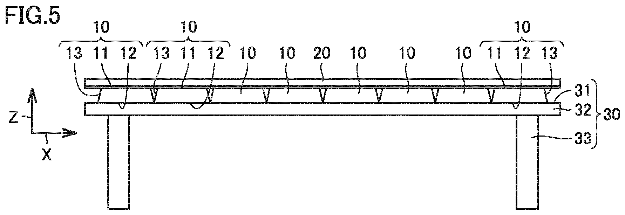

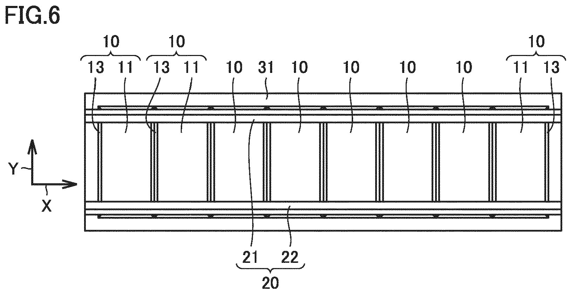

Subsequently, rail 20 is attached to the plurality of solar cell modules 10. As shown in Figs. 5 and 6, rail 20 is disposed on bottom surface 11 of each of the plurality of solar cell modules 10. Rail 20 has a rail 21 on one side and a rail 22 on the other side. Rail 21 on one side and rail 22 on the other side each have a longitudinal direction in first direction X. In other words, rail 21 on one side and rail 22 on the other side are each disposed in the direction of the shorter side of solar cell module 10. The direction in which rail 21 on one side extends is parallel to the direction in which rail 22 on the other side extends.

For example, eight solar cell modules 10 may first be disposed on working surface 31 and rails 20 may subsequently be attached to the eight solar cell modules 10, or two solar cell modules 10 on opposite sides may first be disposed on working surface 31 and rails 20 may subsequently be attached to the two solar cell modules 10 on the opposite sides, and thereafter, the remaining six solar cell modules 10 may be attached to rails 20. Attaching through such a procedure can reduce misalignment of the plurality of solar cell modules 10. A truss (not shown) may be used to connect rail 21 on one side and rail 22 on the other side.

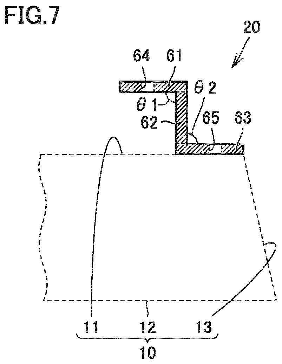

As shown in Fig. 7, rail 20 has a cross section in the form of a letter Z for example. Specifically, rail 20 includes a first rail portion 61, a second rail portion 62, and a third rail portion 63. First rail portion 61 is contiguous to one side end of second rail portion 62. Third rail portion 63 is contiguous to the other side end of second rail portion 62. Second rail portion 62 is located between first rail portion 61 and third rail portion 63. As observed at second rail portion 62, first rail portion 61 projects on one side, and third rail portion 63 projects on the other side. In other words, as observed at second rail portion 62, first rail portion 61 projects on a side opposite to that on which third rail portion 63 projects.

As shown in Fig. 7, in a cross section, first rail portion 61 extends to be substantially perpendicular to second rail portion 62. Similarly, third rail portion 63 extends to be substantially perpendicular to second rail portion 62. In a cross section, an angle θ1 formed by first rail portion 61 and second rail portion 62 may be less than 90° or may be 90° or larger. In a cross section, an angle θ2 formed by second rail portion 62 and third rail portion 63 may be less than 90° or may be 90° or larger. First rail portion 61 may be provided with a first through hole 64. Similarly, third rail portion 63 may be provided with a second through hole 65. First through hole 64 and second through hole 65 each receive a bolt or a rivet, as will described hereinafter.

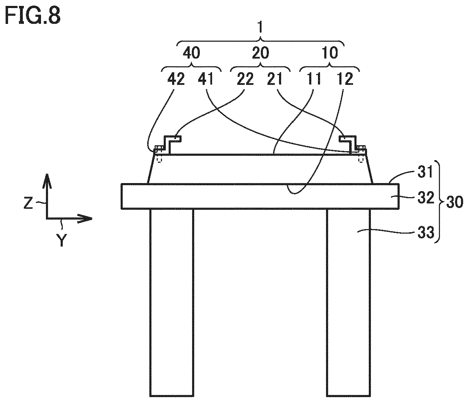

Subsequently, rail 20 is attached to each of the plurality of solar cell modules 10 with a fixing part 40. Fixing part 40 includes, for example, a first fixing member 41 and a second fixing member 42. While fixing part 40 is not particularly limited as long as it can fix rail 20 to each of the plurality of solar cell modules 10, it is for example a bolt or a rivet. As shown in Fig. 8, rail 21 on one side is disposed on bottom surface 11 of each of the plurality of solar cell modules 10 at an end on one side in second direction Y. Rail 21 on one side is fixed to bottom surface 11 of each of the plurality of solar cell modules 10 with first fixing member 41. Rail 22 on the other side is disposed on bottom surface 11 of each of the plurality of solar cell modules 10 at an end on the other side in second direction Y. Rail 22 on the other side is fixed to bottom surface 11 of each of the plurality of solar cell modules 10 with second fixing member 42. Solar cell array 1 is thus formed (see Fig. 8). Solar cell array 1 has a weight for example of 100 kg.

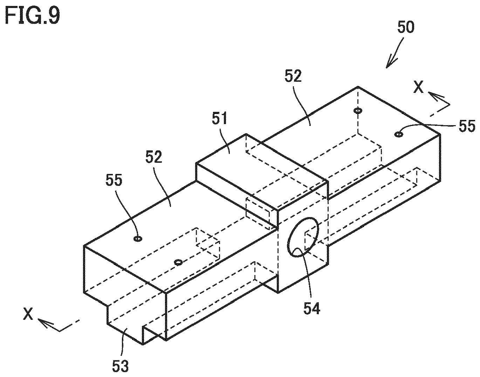

Hereinafter, a jig 50 for manufacturing solar photovoltaic power generation apparatus 100 according to the present embodiment will be described. Jig 50 for manufacturing solar photovoltaic power generation apparatus 100 according to the present embodiment is a solar photovoltaic power generation apparatus manufacturing jig for holding solar cell array 1 having the pair of fixing members 20. As shown in Fig. 9, jig 50 for manufacturing solar photovoltaic power generation apparatus 100 according to the present embodiment has a pair of rail attachment portions 52 (a pair of attachment portions 52) and a central region 51. The pair of rail attachment portions 52 is a portion to which the pair of rails 20 is attached. Central region 51 is provided between the paired rail attachment portions 52. That is, central region 51 is sandwiched by the paired rail attachment portions 52. Central region 51 has an insertion hole 54. Insertion hole 54 has a round cross section. While Jig 50 is not particularly limited in material, it is for example aluminum or stainless steel.

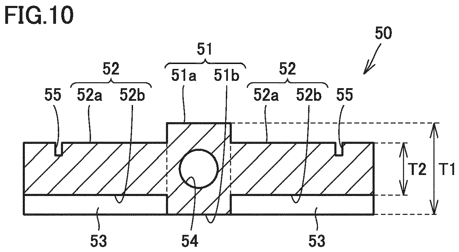

Fig. 10 is a schematic cross section taken along a line X-X of Fig. 9. As shown in Fig. 10, a thickness T1 of central region 51 is larger than a thickness T2 of each of the paired rail attachment portions 52. The paired rail attachment portions 52 each have a first surface 52a and a second surface 52b. First surface 52a is brought into contact with the pair of rails 20. Second surface 52b is a surface facing away from first surface 52a. First surface 52a is provided with an attachment hole 55. Although the number of attachment holes 55 is not particularly limited, it is for example four attachment holes. Two attachment holes 55 are provided in each of the paired rail attachment portions 52. Second surface 52b is provided with a protrusion 53. Protrusion 53 is contiguous to central region 51.

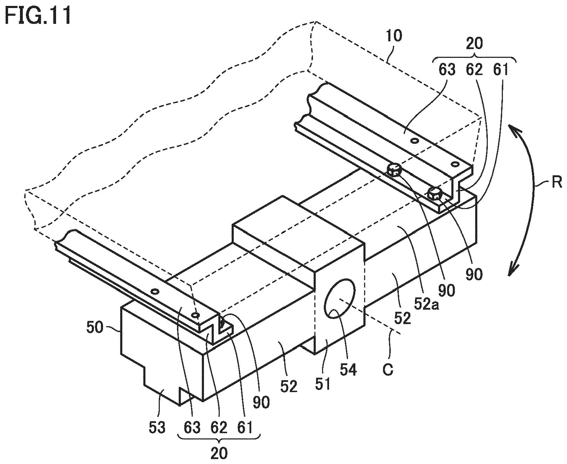

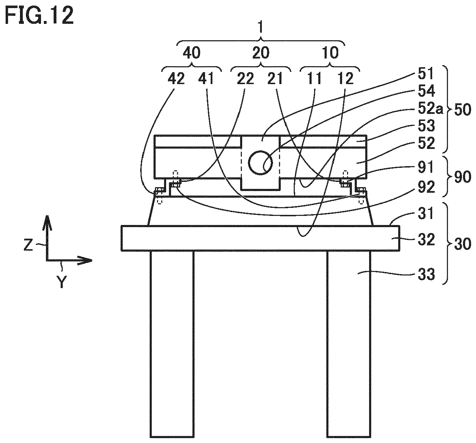

Subsequently, the step of attaching jig 50 to rail 20 is performed. Initially, jig 50 is disposed on rail 20. As shown in Fig. 11, jig 50 is disposed in contact with first rail portion 61 of rail 20. Rail 20 is in contact with the pair of rail attachment portions 52 of jig 50. As shown in Fig. 12, a portion of central region 51 is located between the paired rails 20. Central region 51 is spaced from solar cell module 10. The paired rail attachment portions 52 each have first surface 52a facing bottom surface 11 of solar cell module 10. For example, jig 50 is fixed to rail 20 with a fixing part 90 such as a bolt or a rivet. Fixing part 90 includes, for example, a third fixing member 91 and a fourth fixing member 92. Rail 21 on one side is attached to one of the paired rail attachment portions 52 with third fixing member 91. Rail 22 on the other side is attached to the other of the paired rail attachment portions 52 with fourth fixing member 92.

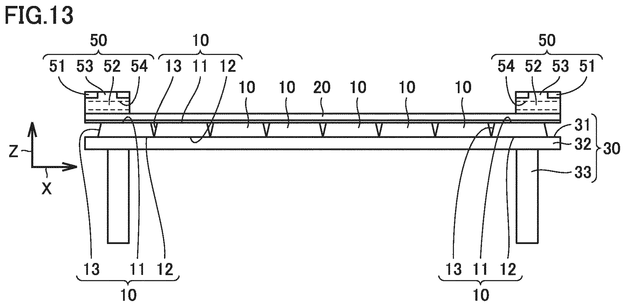

As shown in Fig. 13, jig 50 is attached to the opposite ends of rail 20. Specifically, jig 50 is attached to one end of rail 20 in first direction X and the other end of rail 20 in first direction X. The pair of jigs 50 are opposite to each other.

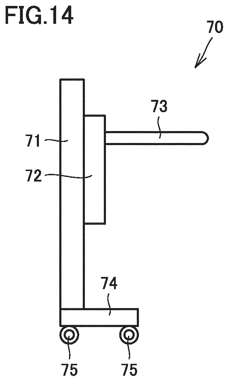

A configuration of an apparatus for manufacturing the solar photovoltaic power generation apparatus according to the present embodiment will now be described. An apparatus 80 for manufacturing solar photovoltaic power generation apparatus 100 according to the present embodiment comprises a lifter 70 and jig 50. As shown in Fig. 14, lifter 70 mainly includes a support 71, a movable part 72, a shaft 73, a pedestal 74, and a tire 75. Movable part 72 is attached to support 71. Movable part 72 can move in the vertical direction. Shaft 73 is attached to movable part 72. Shaft 73 can move in the vertical direction together with movable part 72. Shaft 73 can be inserted into insertion hole 54 of jig 50. Support 71 is attached to pedestal 74. Tire 75 is attached to pedestal 74. Tire 75 is made of rubber. While the number of tires 75 is not particularly limited, it is for example two tires frontward and two tires rearward (four tires in total).

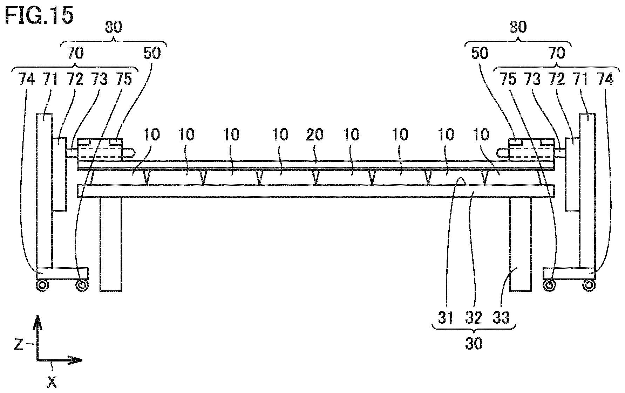

As shown in Fig. 15, two lifters 70 are prepared. One lifter 70 is disposed on one end side of rail 20. The other lifter 70 is disposed on the other end side of rail 20. The two lifters 70 each have shaft 73 inserted into insertion hole 54 of jig 50 associated therewith. Subsequently, shaft 73 moves upward. Thus, solar cell array 1 is lifted up by lifter 70. In other words, the plurality of solar cell modules 10 are spaced from working surface 31 of workbench 30.

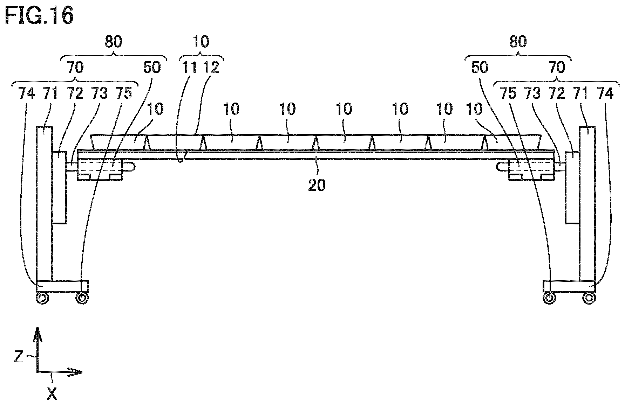

Subsequently, the step of inverting the solar cell array (S20) is performed. Specifically, solar cell array 1 is inverted together with jig 50. Solar cell array 1 is inverted with shaft 73 serving as an axis of rotation. Solar cell array 1 is rotated by about 180°. It may be rotated in a direction R (see Fig. 11) clockwise or counterclockwise. A worker may exert force to solar cell array 1 to rotate and thus invert solar cell array 1. The plurality of solar cell modules 10 thus each have top surface 12 facing upward Z and bottom surface 11 facing downward (see Fig. 16).

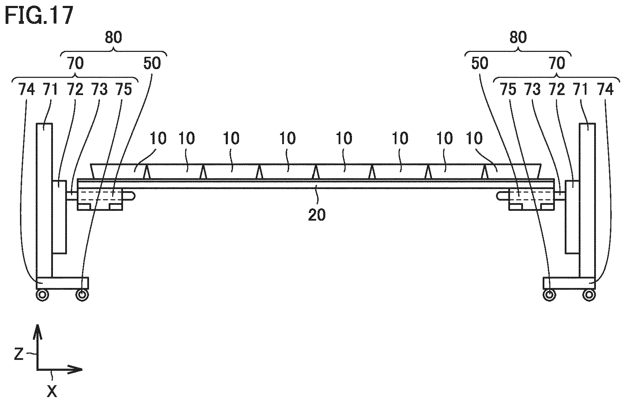

Subsequently, the step of transporting solar cell array 1 is performed. Specifically, solar cell array 1 is transported while solar cell array 1 is supported by lifter 70. Solar cell array 1 may be adjusted in level before it is transported. Specifically, solar cell array 1 is adjusted in level while solar cell array 1 is supported by lifter 70. Solar cell array 1 is adjusted in level by changing shaft 73 in level by movable part 72. As shown in Fig. 17, in the step of transporting solar cell array 1, solar cell array 1 may be lower in level than in the step of inverting solar cell array 1. Keeping solar cell array 1 low in level allows solar cell array 1 to be transported in a stable state.

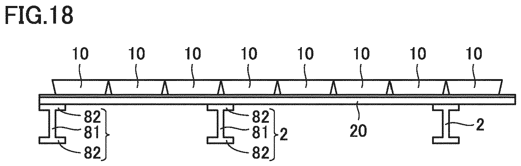

Subsequently, the step of attaching the solar cell array to the support arm (S30) is performed. As shown in Fig. 18, support arm 2 has a cross section for example in the form of a letter H or I. Support arm 2 has a web 81 and a pair of flanges 82. The pair of flanges 82 has one flange attached to one end of web 81. The pair of flanges 82 has the other flange attached to the other end of web 81.

As shown in Fig. 18, solar cell array 1 is disposed in contact with one of the paired flanges 82 of support arm 2. Support arm 2 extends in a direction orthogonal to that in which rail 20 of solar cell array 1 extends. Rail 20 of solar cell array 1 is attached to one of the paired flanges 82 of support arm 2.

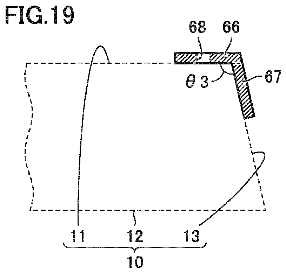

Hereinafter, a configuration of a modified example of rail 20 will be described. As shown in Fig. 19, rail 20 may have a cross section in the form of a letter L for example. Specifically, rail 20 has a fourth rail portion 66 and a fifth rail portion 67. Fourth rail portion 66 is contiguous to fifth rail portion 67. In a cross section, an angle θ3 formed by fourth rail portion 66 and fifth rail portion 67 may be 90° or more, for example. Fourth rail portion 66 may be provided with a third through hole 68. Third through hole 68 receives a bolt or a rivet. Rail 20 may be attached to solar cell module 10 such that fourth rail portion 66 is brought into contact with bottom surface 11 of solar cell module 10 and fifth rail portion 67 is brought into contact with side surface 13 of solar cell module 10.

Solar photovoltaic power generation apparatus 100 according to the present embodiment has a function and effect, as described below:
In solar photovoltaic power generation apparatus 100 according to the present embodiment, solar cell array 1 is formed by attaching a plurality of solar cell modules 10 to fixing member 20. Solar cell array 1 is attached to support arm 2. By previously preparing solar cell array 1 in a factory or the like in which an environment for installation is stable, a negative effect on efficiency of installation due to environment, weather, and the like can be minimized. As a result, the productivity of solar photovoltaic power generation apparatus 100 is improved.

Furthermore, in solar photovoltaic power generation apparatus 100 according to the present embodiment, the step of forming solar cell array 1 includes: disposing the plurality of solar cell modules 10 each with bottom surface 11 facing upward Z; and disposing fixing member 20 on bottom surface 11. This allows fixing member 20 to be fixed to each of the plurality of solar cell modules 10 in an operation performed from above the plurality of solar cell modules 10. When this is compared with a fixing operation performed from below, the former allows the fixing operation to be done efficiently. Furthermore, when the fixing operation is performed from above, a fixed state can be easily inspected. This can improve solar photovoltaic power generation apparatus 100 in quality.

Furthermore, according to solar photovoltaic power generation apparatus 100 of the present embodiment, in the step of disposing the plurality of solar cell modules 10 each with bottom surface 11 facing upward, the plurality of solar cell modules 10 are each disposed on workbench 30. This allows the fixing operation to be done more efficiently. In addition, disposing the plurality of solar cell modules 10 on workbench 30 each with bottom surface 11 facing upward allows fixing member 20 to be attached to bottom surface 11 from above and hence efficiently.

Furthermore, according to solar photovoltaic power generation apparatus 100 of the present embodiment, workbench 30 has a flat working surface 31. Top surface 12 facing away from bottom surface 11 is in contact with working surface 31. The plurality of solar cell modules 10 can thus be each easily improved in horizontality. This can reduce the necessity of inserting a level adjusting spacer between each of the plurality of solar cell modules 10 and fixing member 20. As a result, the productivity of solar photovoltaic power generation apparatus 100 can be improved.

Furthermore, according to solar photovoltaic power generation apparatus 100 according to the present embodiment, attaching jig 50 to fixing member 20, inverting solar cell array 1 together with jig 50, and shaft 73 of lifter 70 is inserted through insertion hole 54 of jig 50. In the step of inverting solar cell array 1 together with jig 50, solar cell modules 10 are inverted with shaft 73 serving as an axis of rotation. This allows heavy solar cell array 1 to be easily inverted.

Furthermore, solar photovoltaic power generation apparatus 100 according to the present embodiment further comprises transporting solar cell array 1 while solar cell array 1 is supported by lifter 70. This allows heavy solar cell array 1 to be easily transported.

Furthermore, solar photovoltaic power generation apparatus 100 according to the present embodiment further comprises adjusting solar cell array 1 in level while solar cell array 1 is supported by lifter 70. This allows heavy solar cell array 1 to be transported in a stable state.

Furthermore, in solar photovoltaic power generation apparatus 100 according to the present embodiment, fixing member 20 has a cross section in the form of a letter Z. Fixing member 20 can thus be enhanced in strength. As a result, flexing of fixing member 20 can be suppressed. Accordingly, the plurality of solar cell modules 10 can each be easily improved in horizontality.

Jig 50 for manufacturing solar photovoltaic power generation apparatus 100 according to the present embodiment is a solar photovoltaic power generation apparatus manufacturing jig for holding solar cell array 1 having a pair of fixing members 20, jig 50 comprising: a pair of attachment portions 52 and a central region 51. The pair of attachment portions 52 allows the pair of fixing members 20 to be attached thereto. Central region 51 is provided between the paired attachment portions 52. Central region 51 has insertion hole 54. This allows solar cell array 1 to be easily inverted. As a result, the productivity of solar photovoltaic power generation apparatus 100 can be improved.

Furthermore, in jig 50 for manufacturing solar photovoltaic power generation apparatus 100 according to the present embodiment, central region 51 is larger in thickness than each of the paired attachment portions 52. Jig 50 for manufacturing solar photovoltaic power generation apparatus 100 can thus be enhanced in rigidity.

Furthermore, in jig 50 for manufacturing solar photovoltaic power generation apparatus 100 according to the present embodiment, the paired attachment portions 52 each include first surface 52a brought into contact with a respective one of the paired fixing members 20 and second surface 52b facing away from first surface 52a. Second surface 52b has protrusion 53 contiguous to central region 51. Jig 50 for manufacturing solar photovoltaic power generation apparatus 100 can thus be further enhanced in rigidity.

The apparatus for manufacturing solar photovoltaic power generation apparatus 100 according to the present embodiment comprises jig 50 for manufacturing solar photovoltaic power generation apparatus 100, and lifter 70 having shaft 73 that can be inserted through insertion hole 54. Lifter 70 has tire 75. When lifter 70 is a typical lifter, a caster made of metal is used therefor. When lifter 70 with a caster made of metal moves on an unpaved ground surface such as desert, the caster catches sand and cannot move smoothly. When tire 75 is used instead of the caster, lifter 70 can be moved easily even on an unpaved ground surface such as desert.

It should be understood that the embodiments disclosed herein have been described for the purpose of illustration only and in a non-restrictive manner in any respect. The scope of the present invention is defined by the terms of the claims, rather than the description above, and is intended to encompass any modifications within the meaning and scope equivalent to the terms of the claims.

### REFERENCE SIGNS LIST

1 solar cell array, 2 support arm, 3 pole, 4 rotary shaft, 5 drive, 6 fastener, 7 connector, 9 solar cell array assembly, 10 solar cell module, 11 bottom surface, 12 top surface, 13 side surface, 20 rail (fixing member), 21 rail on one side, 22 rail on the other side, 30 workbench, 31 working surface, 32 top plate, 33, 71 support, 40, 90 fixing part, 41 first fixing member, 42 second fixing member, 50 jig (manufacturing jig), 51 central region, 52 rail attachment portion (attachment portion), 52a first surface, 52b second surface, 53 protrusion, 54 insertion hole, 55 attachment hole, 61 first rail portion, 62 second rail portion, 63 third rail portion, 64 first through hole, 65 second through hole, 66 fourth rail portion, 67 fifth rail portion, 68 third through hole, 70 lifter, 72 movable part, 73 shaft, 74 pedestal, 75 tire, 80 manufacturing apparatus, 81 web, 82 flange, 91 third fixing member, 92 fourth fixing member, 100 solar photovoltaic power generation apparatus, A first axis of rotation, B second axis of rotation, T1, T2 thickness, X first direction, Y second direction, Z top.

## Claims

1. A method for manufacturing a solar photovoltaic power generation apparatus comprising:
forming a solar cell array by attaching a plurality of solar cell modules to a fixing member extending in a longitudinal direction; and
attaching the solar cell array to a support arm.

2. The method for manufacturing a solar photovoltaic power generation apparatus according to claim 1, wherein the forming the solar cell array includes:
disposing the plurality of solar cell modules each with a bottom surface facing upward; and
disposing the fixing member on the bottom surface.

3. The method for manufacturing a solar photovoltaic power generation apparatus according to claim 2, wherein in the disposing the plurality of solar cell modules each with a bottom surface facing upward, the plurality of solar cell modules are each disposed on a workbench.

4. The method for manufacturing a solar photovoltaic power generation apparatus according to claim 3, wherein
the workbench has a flat working surface,
the plurality of solar cell modules each have a top surface facing away from the bottom surface, and
the top surface is in contact with the working surface.

5. The method for manufacturing a solar photovoltaic power generation apparatus according to any one of claims 1 to 4, further comprising:
attaching a jig to the fixing member;
inverting the solar cell array together with the jig; and
inserting a shaft of a lifter through an insertion hole of the jig, wherein
in the inverting the solar cell array together with the jig, the solar cell modules are inverted with the shaft serving as an axis of rotation.

6. The method for manufacturing a solar photovoltaic power generation apparatus according to claim 5, further comprising transporting the solar cell array while the solar cell array is supported by the lifter.

7. The method for manufacturing a solar photovoltaic power generation apparatus according to claim 5 or 6, further comprising adjusting the solar cell array in level while the solar cell array is supported by the lifter.

8. The method for manufacturing a solar photovoltaic power generation apparatus according to claim 7, wherein the adjusting the solar cell array in level precedes the transporting the solar cell array.

9. The method for manufacturing a solar photovoltaic power generation apparatus according to claim 8, wherein the solar cell array is lower in level in the transporting the solar cell array than in the inverting the solar cell array.

10. The method for manufacturing a solar photovoltaic power generation apparatus according to any one of claims 1 to 9, wherein the fixing member has a cross section in a form of a letter Z.

11. A jig for manufacturing a solar photovoltaic power generation apparatus, the jig being for holding a solar cell array having a pair of fixing members extending in a longitudinal direction, the jig comprising:
a pair of attachment portions allowing the pair of fixing members to be attached thereto; and
a central region provided between the paired attachment portions,
the central region having an insertion hole.

12. The jig for manufacturing a solar photovoltaic power generation apparatus according to claim 11, wherein the central region is larger in thickness than each of the paired attachment portions.

13. The jig for manufacturing a solar photovoltaic power generation apparatus according to claim 11 or 12, wherein
the paired attachment portions each include a first surface brought into contact with a respective one of the paired fixing members and a second surface facing away from the first surface, and
the second surface has a protrusion contiguous to the central region.

14. An apparatus for manufacturing a solar photovoltaic power generation apparatus comprising:
a jig for manufacturing a solar photovoltaic power generation apparatus according to any one of claims 11 to 13; and
a lifter having a shaft that can be inserted through the insertion hole,
the lifter having a tire.
